# EUROPEAN PATENT SPECIFICATION

(11) **EP 2 621 618 B1**
(45) Date of publication and mention of the grant of the patent: **23.07.2014**
(21) Application number: 11781616.5
(22) Date of filing: 29.09.2011
(51) Int. Cl.: B01F 3/04, B67D 1/00, B01F 5/02, G05D 9/12, B01F 15/00

(54) **DEVICE FOR THE PRODUCTION OF CARBONATED DRINKS**
VORRICHTUNG ZUR HERSTELLUNG VON KOHLENSÄUREHALTIGEN GETRÄNKEN
DISPOSITIF POUR LA PRODUCTION DE BOISSONS GAZEUSES

(30) Priority: 30.09.2010 IT MI20101793
(43) Date of publication of application: 07.08.2013
(73) Proprietor: TOF S.r.l., 28017 S. Maurizio D'Opaglio (NO) (IT)
(72) Inventor: TONATI, Massimo, I-28017 San Maurizio D'opaglio (no) (IT)
(74) Representative: Fisauli, Beatrice A. M.
(86) International application number: PCT/IB2011/054296
(87) International publication number: WO 2012/056339

(56) References cited:
- WO-A1-00/41803
- WO-A1-2008/125896
- DE-U1- 29 822 696
- GB-A- 668 405

## Description

The present invention relates to a device for the production of carbonated beverages, in particular water, suitable to be installed either horizontally or vertically.

Devices have existed for some time to prepare and supply water with carbon dioxide added in a completely automatic way and with a high level of concentration of CO₂ gas.

Document WO 00/41803 describes a related prior art carbonator.

The patent US 2588677 describes a device of simple design, that is simple to produce and to assemble and operates for long periods of time without requiring particular maintenance, and capable of supplying large or small quantities of carbonated water simply by feeding it with water and CO₂ gas.

In recent times products have become established for domestic use, suitable to produce carbonated water by simply feeding them through connection to the mains water supply and to a carbon dioxide bottle.

Devices of this type are very simple, as they require a container into which water is sprayed in a carbon dioxide atmosphere; in these conditions the water absorbs the gas and collects on the bottom of said container and can be drawn through a pipe into which it is driven by the pressure of the mains water supply and of the gas. Therefore, two zones are distinguished in the container. A lower zone, the level of which is maintained constant, in which the water that has already absorbed the gas collects, and an upper zone, into which the water is sprayed, in which the gas is also present.

To draw the carbonated water, the delivery pipe must lift from the lower zone of the container, while the incoming water must pass through a pipe that flows out in the upper zone. The position for inflow of the gas is less restrictive, as in any case this collects in the upper part of the container.

Said containers generally have an elongated cylindrical shape and can be positioned either vertically or horizontally, depending on the place in which they are to be installed. Normally, vertical containers are installed in the unit under the kitchen sink, while horizontal containers are installed under this unit, with evident advantages in terms of use of space.

The problem that this poses consists in the fact that, to comply with the conditions above, the pipes for supply of water to be treated and of the carbon dioxide and the pipe to draw the treated water are in different positions in the two cases, and therefore, according to prior art, it is not possible to satisfy both installation requirements with a single product.

The present invention overcomes said problem by proposing a device for the production of carbonated beverages, in particular water, but also fruit juices, in which the arrangement of the pipes for supply of the beverage to be treated and of the carbon dioxide and the pipe for drawing the treated beverage are positioned in a manner, according to claim 1, such that this product can be installed either vertically or horizontally.

The device according to the invention is of the type comprising:
- a container in which two zones are distinguished: a first zone **A**, in the lower part of said container, occupied by the beverage with CO₂ added, and a second zone **B**, above said first zone **A**, filled with CO₂ gas, said two zones **A** and **B** being separated by a surface **S**;
- a first pipe for supplying the beverage to which CO₂ is to be added, which flows out above said surface **S**;
- a second pipe (4) for supplying CO₂ gas, which flows out above said surface **S**;
- a third pipe to draw said beverage with CO₂ added, which lifts from below said surface **S**;
- a probe to maintain substantially constant the position of said surface **S**;
and is characterized in that said first and second pipe
- are located on the same head of the cylindrical container;
- are positioned on the same side of the plane of symmetry **P**, of said cylindrical container, parallel to said separation surface **S** of the two zones, **A** and **B**, respectively occupied by the liquid and by the gas, when the device is in horizontal position, and in particular above said separation surface **S**.

The fact that the same product can be used for the two installations allows a reduction in production costs, but above all advantages in terms of logistics in relation to the management of a single product, with a reduction in warehouse stocks. Another important fact is that the final use can change the type of installation, should this become necessary at a later date.

Other beverages, such as orange juice, can also be treated.

The invention shall now be described, by way of non-limiting example, according to a preferred embodiment, with reference to the accompanying figures, wherein:
- Figs. 1 and 2 show the device according to the invention installed horizontally;
- Fig. 3 shows the device according to the invention installed vertically.

With reference to the accompanying figures, the numeral (1) indicates a device for the production of carbonated water according to the invention. Said device comprises a container (2) of elongated cylindrical shape, provided with a pair of L-shaped elements (2a), suitable for fixing to a support surface. When the device (1) is operating, the container (2) is partially filled with water. In these conditions two zones are distinguished: a first zone **A**, in the lower part of the container (2), occupied by the water, and a second zone **B**, above the first, filled with CO₂ gas. If the device (1) is installed horizontally, the two zones are arranged with the separation surface **S** parallel to the axis of the cylinder (2), while when the device (1) is installed vertically, said separation surface **S** is perpendicular to the axis of said cylinder (2).

The device (1) also comprises a first pipe (3), for inflow of the water to be treated, which flows into the upper zone **B**, occupied by the CO₂, a second pipe (4), for inflow of the CO₂, which also flows into the upper zone **B**, and a third pipe (5) for drawing the treated water, which lifts from the lower zone **A**, occupied by the water.

Said first and second pipe (3, 4) flow into the zone **B** occupied by the CO₂ both in the case of horizontal and of vertical installation, as they simultaneously satisfy the following conditions:
- they located on the same head (20) of the cylindrical container (2);
- they are positioned on the same side of the plane of symmetry **P**, parallel to said separation surface **S** of the two zones, **A** and **B**, respectively occupied by the liquid and by the gas, when the device (1) is in horizontal position, and in particular above said separation surface **S**.

Naturally, the first condition is necessary to operate the device (1) vertically, while the second is necessary to operate it horizontally. By satisfying both these conditions, the device (1) can operate in both positions.

In the accompanying figures, the third pipe (5) is rectilinear and exits from the head (20); however, it could also have a different form and exit from any part of the container (2), providing its end lifts from the zone **A** occupied by the water.

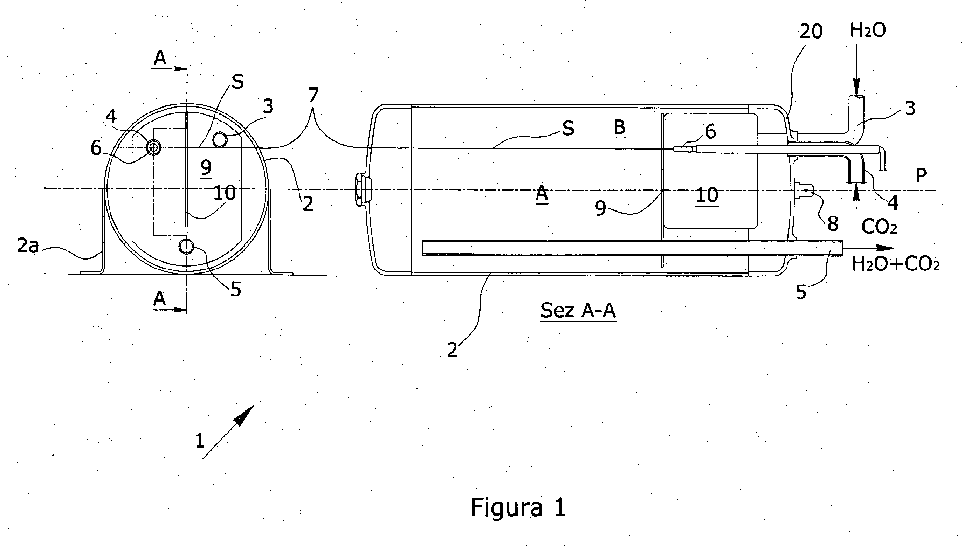

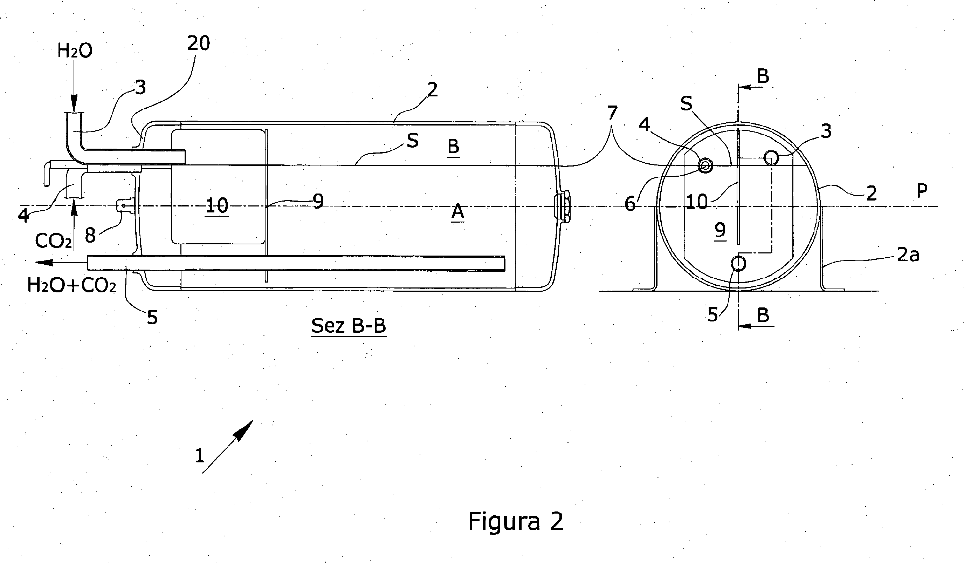

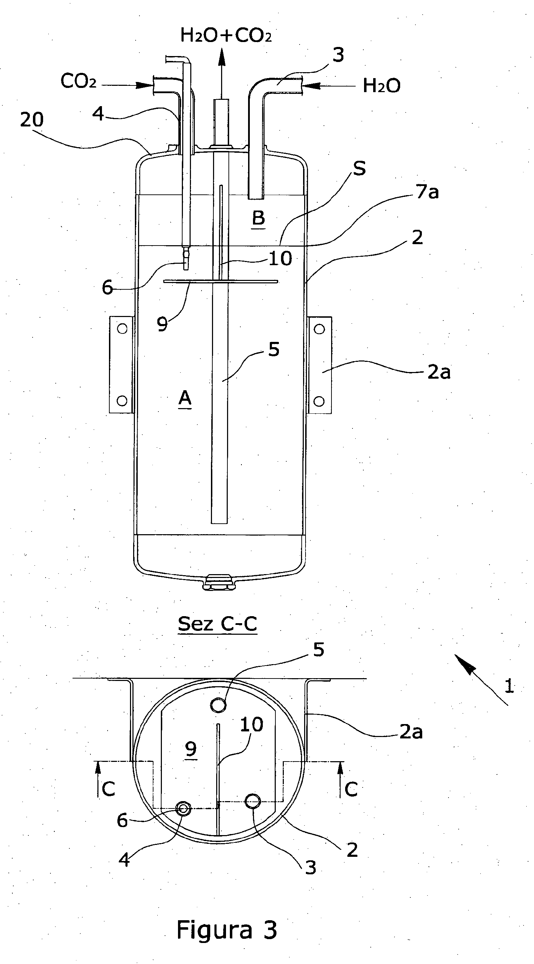

A probe (6), suitable to detect the level of the water, is inserted in the second pipe (4), said probe being connected to a solenoid valve (not shown) which shuts off the flow of water from the mains water supply. If the pressure of the mains water supply is insufficient and the device is connected to this through a pump, the probe (6) would be connected to said pump. In practice, when the water reaches the predetermined level (indicated with (7) in Figs 1 and 2, which show the device in horizontal position, and with (7a) in Fig. 3, which shows the device in vertical position), it closes a circuit by electrically connecting the probe (6) to the contact (8), causing closing of the solenoid valve that shuts off the water from the mains water supply or shutting down the pump.

The probe (6) is located in a position such that the water fills the container (2) to approximately 80% of the volume thereof, leaving the volume above free for the CO₂, both in horizontal and vertical position. This result is achieved by appropriately adjusting both the distance of the probe from the axis of the cylindrical container (2), and the axial position thereof.

Two partitions are positioned inside the container (2): a first partition (9), perpendicular to the axis of the cylindrical container (2), and a second partition (10), which lies on a vertical plane that is positioned between said first pipe (3), for supplying the water to be treated, and said second pipe (4), for supplying the CO₂. Operation of the system is as follows. The water flows through the supply pipe (3) under pressure and strikes the first partition (9) perpendicular to the axis of the cylindrical container (2), causing considerable turbulence, which facilitates the absorption of CO₂. The second partition (10), which is positioned between the pipes (3), for supplying the water to be treated, and (4), for supplying the CO₂, has the function of preventing turbulence from propagating to the probe (6), causing the circuit to close in advance, and consequently stopping the supply flow of the water before the established level (7, 7a) is reached.

The water with CO₂ added collects in the lower part of the container (2), from where it is drawn through the third pipe (5), being driven by the pressure of the mains water supply.

As can be seen from the accompanying figures, the device (1) according to the invention is capable of operating in either a horizontal or vertical position, as the pipes (3), (4) and (5), respectively for supplying the water to be treated, for supplying the CO₂ and for collecting the treated water, and of the other elements forming the device (1) according to the invention, are positioned in such a manner, in relation to the levels of the water, (7) for the horizontal position and (7a) for the vertical position, as to allow them to perform their function.

In fact, in both cases, all the elements forming the device (1) according to the invention are capable of performing their function adequately:
- the first pipe (3), for supplying the water to be treated, flow out above the levels (7, 7a) and therefore the flow of incoming water can break against the first partition (9);
- the second pipe (4), for supplying the CO₂, flows out above the levels (7, 7a) and can therefore form said second zone **B** saturated with CO₂ above said levels (7, 7a);
- The third pipe (5), for drawing the treated water, lifts from the zone occupied by the water and, therefore, is able to draw it;
- the first partition (9) is struck directly by the jet of incoming water, when the device (1) is in horizontal position, while when it is in vertical position, this jet must pass through a depth of water, as the level (7a) is such as to completely cover the first partition (9); however, this depth can be made very small, and therefore with no influence on the operation of the device (1), by placing said first partition (9) in close proximity to the probe (6);
- the second partition (10) performs its function of preventing turbulence in the zone occupied by the probe (6), as in both cases it is positioned between said first pipe (3), for supplying the water to be treated, and said second pipe (4), for supplying CO₂.

In order to obtain a high level of turbulence; the pipe (3) for supplying water is preferably located at a higher position relative to the water level (7), when the device (1) is in horizontal position, while this position is completely irrelevant when the device (1) is in vertical position.

From the description above it is evident that with a single device it is possible to satisfy both horizontal and vertical installation requirements, said result being novel, as it cannot be obtained with prior art devices.

The device (1) has been described in relation to the treatment of water. However, it is also able to treat other beverages, such as orange or lemon juice.

The invention has been described purely by way of non-limiting example according to a preferred embodiment. Those skilled in the art may find numerous other variants, all falling within the scope of protection of the claims below.

## Claims

1. Device (1) for the production of beverages with CO₂ added, in particular water, suitable to be installed either horizontally or vertically, of the type that includes:
• a container (2), in which two zones are distinguished: a first zone **A**, in the lower part of said container (2), occupied by the beverage with CO₂ added, and a second zone **B**, above said first zone A, filled with CO2 gas, said two zones **A** and B being separated by a surface **S**;
• a first pipe (3) for supplying the beverage to which CO₂ is to be added, which flows out above said surface **S**;
• a second pipe (4) for supplying CO₂ gas, which flows out above said surface **S**;
• a third pipe (5) for drawing said beverage with CO₂ added, which lifts from below said surface **S**;
• a probe (6) to maintain substantially constant the position of said surface **S**;
**characterized in that** said first and second pipe (3, 4), and said probe (6)
• are located on the same head (20) of the cylindrical container (2);
• are positioned on the same side of the plane of symmetry **P**, of said cylindrical container (2), parallel to said separation surface **S** of the two zones, A and B, respectively occupied by the liquid and by the gas when the device (1) is in horizontal position, and in particular above said separation surface **S**, so that said pipe (3), for supplying water, is located in a higher position relative to the water level (7), when the device (1) is placed horizontally.

2. Device (1) according to claim 1, **characterized in that** said probe (6), suitable to detect the water level is positioned inside said second pipe (4) for supplying CO₂ gas.

3. Device (1) according to claim 1, **characterized in that** said probe (6), suitable to detect the water level, is connected to a solenoid valve that shuts off the flow of water from the mains water supply, said solenoid valve closing to stop the flow when the beverage with CO₂ added, present in the zone **A**, reaches the predetermined level (7) or (7a).

4. Device (1) according to claim 1, **characterized in that** said probe (6), suitable to detect the water level, is connected to a pump, said pump shutting down to stop the flow when the beverage with CO₂ added, present in the zone **A**, reaches the predetermined level, (7) or (7**A**).

5. Device (1) according to claim 1, **characterized in that** said third pipe (5) exits from the head (20) of said container (2), its end inside the container (2) lifting from the zone **A** occupied by the beverage with CO₂ added.

6. Device (1) according to claim 1, **characterized in that** said third pipe (5) exits from any part of said container (2), its end inside the container (2) lifting from in the zone **A** occupied by the beverage with CO₂ added.

## Patentansprüche

1. Vorrichtung (1) zur Herstellung von Getränken mit CO₂-Zusatz, insbesondere Wasser, geeignet, um entweder horizontal oder vertikal installiert zu werden, des Typs, der Folgendes umfasst:
• einen Behälter (2), in dem zwei Bereiche unterschieden werden: ein erster Bereich **A**, im unteren Teil des besagten Behälters (2), in dem sich das Getränk mit CO₂-Zusatz befindet, und ein zweiter Bereich **B**, oberhalb des besagten ersten Bereichs A, gefüllt mit CO₂-Gas, wobei die beiden Bereiche **A** und **B** durch eine Fläche **S** getrennt sind;
• ein erstes Rohr (3) für die Zufuhr des Getränks, dem CO₂ hinzugefügt werden soll, das über der besagten Fläche **S** austritt;
• ein zweites Rohr (4) für die Zufuhr von CO₂-Gas, das über der besagten Fläche **S** austritt;
• ein drittes Rohr (5) zum Entnehmen des besagten Getränkes mit CO₂-Zusatz, das von unterhalb der besagten Fläche **S** aufsteigt;
• eine Sonde (6), um die Lage der besagten Fläche **S** im Wesentlichen konstant zu halten;
**gekennzeichnet dadurch, dass** das besagte erste und zweite Rohr (3, 4), und die besagte Sonde (6)
• auf dem gleichen Kopf (20) des zylinderförmigen Behälters (2) positioniert sind;
• auf der gleichen Seite der Symmetrieebene **P** des besagten zylinderförmigen Behälters (2), parallel zur besagten Trennfläche **S** der beiden Bereiche A und B, positioniert sind, in denen sich die Flüssigkeit, beziehungsweise das Gas befinden, wenn die Vorrichtung (1) in horizontaler Lage und insbesondere oberhalb der besagten Trennfläche **S** gelagert ist, so dass das besagte Rohr (3) für die Wasserzufuhr in einer höheren Lage in Bezug auf das Wasserniveau (7) positioniert ist, wenn die Vorrichtung (1) horizontal angeordnet ist.

2. Vorrichtung (1) gemäß Anspruch 1, **gekennzeichnet dadurch, dass** die besagte Sonde (6), geeignet, um das Wasserniveau festzustellen, innerhalb des besagten zweiten Rohrs (4) zur Zufuhr von CO₂-Gas positioniert ist.

3. Vorrichtung (1) gemäß Anspruch 1, **gekennzeichnet dadurch, dass** die besagte Sonde (6), geeignet, um das Wasserniveau festzustellen, mit einem Elektromagnetventil verbunden ist, das den Wasserzufluss aus der Trinkwasserleitung unterbricht, wobei das besagte Elektromagnetventil schließt, um den Fluss zu stoppen, wenn das Getränk mit CO₂-Zusatz, das im Bereich **A** anwesend ist, das vorgesehene Niveau (7) oder (7a) erreicht.

4. Vorrichtung (1) gemäß Anspruch 1, **gekennzeichnet dadurch, dass** die besagte Sonde (6), geeignet, um das Wasserniveau festzustellen, mit einer Pumpe verbunden ist, wobei die besagte Pumpe abschaltet, um den Fluss zu stoppen, wenn das Getränk mit CO₂-Zusatz, das im Bereich **A** anwesend ist, das vorgesehene Niveau (7) oder (7**A**) erreicht.

5. Vorrichtung (1) gemäß Anspruch 1, **gekennzeichnet dadurch, dass** das besagte dritte Rohr (5) aus dem Kopf (20) des besagten Behälters (2) austritt, wobei sein Ende innerhalb des Behälters (2) aus dem Bereich **A**, in dem sich das Getränk mit CO₂-Zusatz befindet, aufsteigt.

6. Vorrichtung (1) gemäß Anspruch 1, **gekennzeichnet dadurch, dass** das besagte dritte Rohr (5) aus jedem Teil des besagten Behälters (2) austritt, wobei sein Ende innerhalb des Behälters (2) aus dem Bereich **A**, in dem sich das Getränk mit CO₂-Zusatz befindet, aufsteigt.

## Revendications

1. Dispositif (1) pour la production de boissons avec ajout de CO₂, en particulier de l'eau, pouvant être installé à l'horizontale ou à la verticale, de type incluant :
• un récipient (2), dans lequel deux zones sont distinguées : une première zone **A**, dans la partie inférieure dudit récipient (2), occupée par la boisson avec le CO₂ ajouté, et une deuxième zone **B**, au-dessus de ladite première zone A, remplie de gaz CO₂, lesdites deux zones **A** et **B** étant séparées par une surface **S** ;
• un premier tuyau (3) pour l'alimentation de la boisson à laquelle le CO₂ doit être ajouté, qui s'écoule de ladite surface **S** ;
• un deuxième tuyau (4) pour l'alimentation du gaz CO₂, qui s'écoule de ladite surface **S** ;
• un troisième tuyau (5) pour tirer la boisson avec le CO₂ ajouté, qui soulève au-dessous de ladite surface **S** ;
• une sonde (6) pour maintenir substantiellement constante la position de ladite surface **S** ;
**caractérisé par le fait que** lesdits premier et deuxième tuyau (3, 4), et ladite sonde (6)
• sont situés sur la même tête (20) du récipient cylindrique (2) ;
• sont positionnés sur le même côté du plan de symétrie **P**, dudit récipient cylindrique (2), parallèle à ladite surface de séparation S des deux zones, A et B, respectivement occupées par le liquide et par le gaz lorsque le dispositif (1) est en position horizontale, et en particulier au-dessus de ladite surface de séparation **S**, de sorte que ledit tuyau (3), pour l'alimentation d'eau, est situé dans une position plus élevée par rapport au niveau de l'eau (7), lorsque le dispositif (1) est placé à l'horizontale.

2. Dispositif (1) selon la revendication 1, **caractérisé par le fait que** ladite sonde (6), adaptée pour détecter le niveau d'eau, est positionnée à l'intérieur dudit deuxième tuyau (4) pour l'alimentation du gaz CO₂.

3. Dispositif (1) selon la revendication 1, **caractérisé par le fait que** ladite sonde (6), adaptée pour détecter le niveau d'eau, est raccordée à une électrovanne qui interrompt l'écoulement de l'eau provenant de l'alimentation principale en eau, ladite électronique se fermant pour interrompre l'écoulement lorsque la boisson avec le CO₂ ajouté, présente dans la zone **A**, atteint le niveau prédéterminé (7) ou (7a).

4. Dispositif (1) selon la revendication 1, **caractérisé par le fait que** ladite sonde (6), adaptée pour détecter le niveau d'eau, est raccordée à une pompe, ladite pompe s'arrêtant pour interrompre l'écoulement lorsque la boisson avec CO₂ ajouté, présente dans la zone **A**, atteint le niveau prédéterminé (7) ou (7**A**).

5. Dispositif (1) selon la revendication 1, **caractérisé par le fait que** ledit troisième tuyau (5) sort de la tête (20) dudit récipient (2), son extrémité à l'intérieur du récipient (2) se soulevant de la zone **A** occupée par la boisson avec CO₂ ajouté.

6. Dispositif (1) selon la revendication 1, **caractérisé par le fait que** ledit troisième tuyau (5) sort d'une partie quelconque dudit récipient (2), son extrémité à l'intérieur du récipient (2) se soulevant de la zone **A** occupée par la boisson avec CO₂ ajouté.
